# EUROPEAN PATENT SPECIFICATION

(11) **EP 0 879 149 B1**
(45) Date of publication and mention of the grant of the patent: **01.12.1999**
(21) Application number: 97902495.7
(22) Date of filing: 10.02.1997
(51) Int. Cl.: B41M 5/40, C09B 47/04, C09B 47/067

(54) **DYE DIFFUSION THERMAL TRANSFER PRINTING**
FARBSTOFFDIFFUSIONSÜBERTRAGUNGSDRUCK DURCH WÄRME
IMPRESSION PAR DIFFUSION DE COLORANTS PAR TRANSFERT THERMIQUE

(30) Priority: 10.02.1996 GB 9602730
(43) Date of publication of application: 25.11.1998
(73) Proprietor: IMPERIAL CHEMICAL INDUSTRIES PLC, London SW1P 3JF (GB)
(72) Inventor: STEPHENSON, Ian, Richard, Great Dunmow,Essex CN6 3DJ (GB)
(74) Representative: Matthews, Heather Clare
(86) International application number: GB9700343
(87) International publication number: WO9728969

(56) References cited:
- EP-A- 0 157 568
- EP-A- 0 638 614
- FR-A- 816 859

## Description

### Introduction

This invention relates to dye diffusion thermal transfer (DDTTP or D2T2) printing, in which a dye or dye mixture is transferred from a dye sheet to a receiver sheet by the application of thermal energy ; and more particularly, to dye diffusion or sublimation thermal transfer printing in which the thermal energy is generated by converting light radiation to heat, such printing being known as light induced thermal transfer (LITT or L2T2) printing.

Thermal transfer printing is a generic term for processes in which one or more thermally transferable dyes are caused to transfer from a dye sheet to a receiver sheet in response to thermal stimuli. Using a dye sheet comprising a thin substrate supporting a dye coat containing one or more such dyes uniformly spread over an entire printing area of the dye sheet, printing can be effected by heating selected discrete areas of the dye sheet whilst the dye coat is pressed against a receiver sheet, thereby causing dye to transfer to corresponding areas of that receiver sheet. The shape of the pattern transferred is determined by the number and location of the discrete areas which are subject to heating. Full colour prints can be produced by printing with different coloured dye coats sequentially in like manner and the different coloured dye coats are usually provided as discrete uniform print-size areas in a repeated sequence along the same dye sheet.

A typical receiver sheet comprises a substrate supporting a receiver coat of a dye-receptive composition containing a material having an affinity for the dye molecules, and into which they can readily diffuse when the adjacent area of dye sheet is heated during printing.

For efficient dye transfer, both the dye coat and the receiver coat need to be heated and therefore, ideally, the maximum heat should be generated at the interface between the dye coat and the receiver coat. In conventional thermal printing using a printing head, the heat is applied to the face of the dye sheet remote from the dye coat and hence dye transfer relies on the conduction of the heat through the dye sheet. There is thus a lag between the application of the heat and the transfer of the dye. This slow "turn-on" is an inherently limiting factor in conventional thermal printing.

The use of a laser as the energy source can improve the "turn-on" as well as providing much higher resolution.

As is well known, the use of a laser requires that there is effective conversion of the light energy to thermal energy. Whilst in principle this conversion could be effected by the dyes themselves, in practice it is more usual, and indeed sometimes essential, to include a separate absorber material in the dye sheet. This is particularly necessary if the laser emits infra-red light.

According to the present invention there is provided a thermal transfer dye sheet comprising a substrate having a dye coat comprising a transferable dye or mixture of dyes and a binder, and, either in said coat, or in a separate layer underneath the dye coat a material capable of absorbing and converting light energy to thermal energy and having the Formula (1)

MₖPc(-O-R-O-)ₓ (-YR¹)_{y} (-Z)ₘ (-SO₃A)ₙ

wherein MₖPc is a phthalocyanine nucleus of the formula (2): 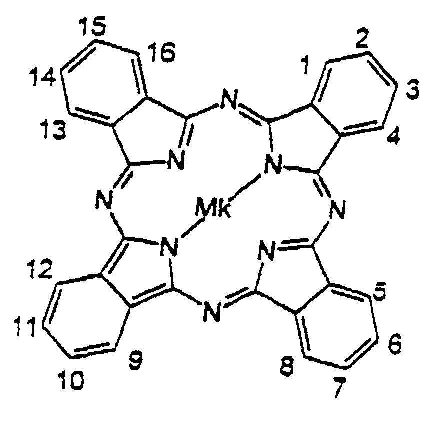
in which M represents a metal atom, a halogeno-metal group, an oxy-metal group or hydrogen and
k is the inverse of half the valency of M;
R represents an optionally substituted 1,2-arylene group;
Y represents oxygen or sulphur;
R¹ represents an optionally substituted hydrocarbyl group;
Z represents a halogen or hydrogen:
A represents hydrogen, a metal or optionally substituted ammonium;
x represents an integer from 1 to 8;
y represents an integer from 0 to 14;
m represents an integer from 0 to 14;
n represents an integer from 0 to 32;
the sum of 2x, y and m not exceeding 16, and the groups or atoms -O-R-O-, -YR¹ and Z are attached to the peripheral carbon atoms numbered 1 to 16 in Formula 2, with the proviso that when n is zero, at least one 1,2-arylene group represented by R carries at least one alkyl group containing at least four carbon atoms.

As indicated by Formula 2 above, the phthalocyanine nucleus of the compounds of the invention may be metal-free or may contain a complexed metal, halogeno-metal or oxy-metal, that is to say it may carry two hydrogen atoms at the centre of the nucleus or it may carry one or two metal atoms, halogeno-metal groups or oxy-metal groups complexed within the centre of the nucleus, Examples of suitable metals, halogeno-metals and oxy-metals include lithium, sodium, copper, nickel, zinc, manganese, iron, chloro-iron, chloro-aluminium, tin, lead, vanadyl and titanyl.

Optionally substituted 1,2-arylene groups which may be represented by R include naphthylene and especially phenylene groups which may optionally be substituted by, for example, one or more alkyl groups, especially C₁₋₂₀-alkyl groups. The value of x is preferably 4 or 8.

Optionally substituted hydrocarbyl groups which may be represented by R1 include optionally substituted alkyl groups and particularly optionally substituted aryl groups, for example naphthyl and especially phenyl groups. The preferred value of y is in the range from 0 to 8.

Halogen atoms which may be represented by Z include fluorine, bromine, iodine and, especially, chlorine. The preferred value of m is in the range from 0 to 8.

Metals which may be represented by A include alkaline earth metals, and, especially, the alkali metals. It is preferred that A is sodium or hydrogen. Compounds of the invention containing -SO₃A groups, which may be attached directly to the peripheral carbon atoms of the phthalocyanine nucleus and/or to the pendent organic groups R and R¹ ,are soluble in water.

In compounds of the invention which contain no sulphonic acid or sulphonate groups (n=0), at least one 1,2-arylene group represented by R carries at least one alkyl group containing at least four carbon atoms so as to provide solubility in organic liquids. Suitable alkyl groups may contain from 4 to 20, preferably from 4 to 12 and especially from 4 to 8 carbon atoms. Preferred alkyl groups include branched alkyl groups, especially tertiary alkyl groups such as t-butyl and t-octyl. For maximum solubility, it is preferred that each 1,2-arylene group carries at least one alkyl group having at least four carbon atoms.

It is preferred that the solubility of the sulphonate-free phthalocyanines of the invention in organic liquids is at least 3%. Preferred organic liquids are selected from aliphatic and aromatic hydrocarbons, ethers, ketones, chlorinated aliphatic and aromatic hydrocarbons, amides and substituted amides. Specific examples of suitable organic liquids are tetrahydrofuran (THF), cyclohexanone, chloroform, toluene, dichloromethane (DCM) and dimethylformamide (DMF).

As specific examples of useful phthalocyanine compounds of Formula 1, there may be mentioned the compounds

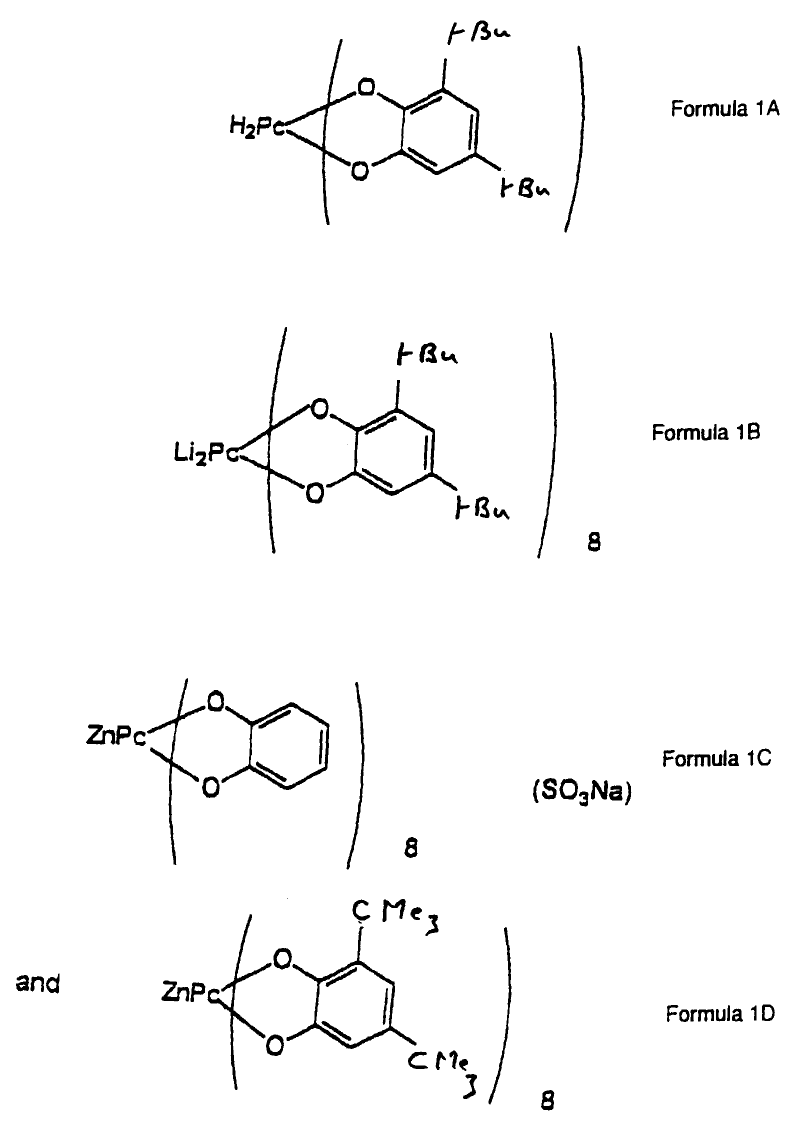

The use of such substituted phthalocyanine compounds which exhibit strong absorption maxima in the near infra red region of the spectrum, particularly in the region between 750 and 900 nm gives improved optical density build up for L2T2 printing and is particularly suitable for use with a diode laser operating at 807 nm. In this connection, it is to be noted that the optionally substituted catechol residues present in the compounds of Formula 1 provide a bathochromic effect of from 50 to 70 nm compared with the corresponding phenoxy-substituted phthalocyanines.

### The Dye Coat

The dye coat may also contain other additives, such as curing agents, preservatives, etc., these and other ingredients being described more fully in EP 133011A, EP 133012A and EP 111004A.

### The Binder

The binder may be any resinous or polymeric material suitable for binding the dye and the absorber compound to the substrate which has acceptable solubility in the ink medium, i.e. the medium in which the dye, absorber material and binder are applied to the transfer sheet. It is preferred however, that the dye and the absorber material are soluble in the binder so that they can exist as a solid solution in the binder on the transfer sheet. In this form there is generally more resistance to migration and crystallisation during storage. Examples of binders include cellulose derivatives, such as ethylhydroxyethylcellulose (EHEC), hydroxypropylcellulose (HPC), ethylcellulose, methylcellulose, cellulose acetate and cellulose acetate butyrate; carbohydrate derivatives, such as starch; alginic acid derivatives; alkyd resins; vinyl resins and derivatives, such as polyvinyl alcohol, polyvinyl acetate, polyvinyl butyral, polyvinyl acetoacetal and polyvinyl pyrrolidone; polycarbonates such as AL-71 from Mitsubishi Gas Chemicals and MAKROLON 2040 from Bayer (MAKROLON is a trade mark); polymers and co-polymers derived from acrylates and acrylate derivatives, such as polyacrylic acid, polymethyl methacrylate and styrene-acrylate copolymers, styrene derivatives such as polystyrene, polyester resins, polyamide resins, such as melamines; polyurea and polyurethane resins; organosilicones, such as polysiloxanes, epoxy resins and natural resins, such as gum tragacanth and gum arabic. Mixtures of two or more of the above resins may also be used, mixtures preferably comprise a vinyl resin or derivative and a cellulose derivative, more preferably the mixture comprises polyvinyl butyral and ethylcellulose, It is also preferred to use a binder or mixture of binders which is soluble in one of the above-mentioned commercially acceptable organic solvents.

The absorber materials of Formula (1) also have strong absorbance properties and are soluble in a wide range of solvents, especially those solvents which are widely used and accepted in the printing industry, for example, alkanols, such as i-propanal and butanol; aromatic hydrocarbons, such as toluene, ethers, such as tetrahydrofuran and ketones such as MEK, MIBK and cyclohexanone. Alternatively the mixture may be dispersed by high shear mixing in suitable media such as water, in the presence of dispersing agents. This produces inks (solvent plus mixture of dyes, absorber material and binder) which are stable and allow production of solution or dispersion coated dyesheets. The latter are stable, being resistant to dye crystallisation or migration during prolonged storage.

### The Substrate

The substrate may be any sheet material which is transparent to the laser light preferably having at least one smooth even surface and capable of withstanding the temperatures involved in L2T2, i.e. up to 400^{º}C for periods up to 20 ms. Examples of suitable materials are polymers, especially polyester, polyacrylate, polyamide, cellulosic and polyalkylene films., including co-polymer and laminated films, especially laminates incorporating a smooth even polyester receptor layer on which the dye is deposited. The thickness of the substrate is preferably less than 20µm and more preferably less than 10µm.

### The L2T2 Process

The dye sheet of the invention may be used in a dye diffusion thermal transfer printing process which comprises contacting a dye sheet comprising a coating comprising a transferable dye or mixture of dyes and an absorber material of Formula (1) with a receiver sheet, so that the coating is in contact with the receiver sheet and selectively exposing discrete areas of the dye sheet to radiation whereby heat is generated and the dye is transferred to the receiver sheet.

### The Receiver Sheet

The receiver sheet conveniently comprises a substrate of polymeric sheet material which may be transparent or opaque. Receiver coats are generally 2-6 µm thick, and examples of suitable materials with good dye-affinity include saturated polyesters soluble in common solvents to enable them readily to be applied to the substrate as coating compositions, and then dried to form the receiver coat.

The phthalocyanine compounds of Formula 1 may be prepared by methods analogous to those used for the preparation of known phthalocyanine compounds. Thus, for example, an appropriately substituted phthalonitrile may be reacted with a metal or metal salt at an elevated temperature, optionally in an inert liquid and/or in the presence of catalytic materials. Sulphonation may then be effected if desired. Appropriately substituted phthalonitriles include phthalonitriles carrying two -ORO- substituents or carrying one -ORO- substituent and optionally one or two -YR¹ substituents. The phthalonitriles may themselves be prepared by reacting halogen-substituted phthalonitriles with catechols and, optionally, phenols.

The invention is further illustrated by the following examples in which all parts and percentages are by weight.

### Example 1

Dyecoat and receiver coat solutions were made up according to the following formulations:

| Dye Coat | | Receiver Coat | |
|---|---|---|---|
| Magenta dye | 12.3g | Vylon 103 | 12.04g |
| Absorber material | 3.0g | Vylon 200 | 5.175g |
| PVB BX1 | 6.65g | Tinuvin 234 | 0.19g |
| ECT 10 | 1.665g | Ketjenflex MH | 1.39g |
| THF | 166.5g | Cymel 303 | 1.12g |
| | | Tegomer | 0.13g |
| | | R4046 | 0.067g |
| | | THF | 128.9g |

(The magenta dye is 3-methyl-4(3-methyl-4-cyanoisothiazol-5-ylazo)-N-ethyl-N-acetoxyethyl aniline, the absorber material is a compound as shown in Formula 1A (Sample 1), a compound as shown in Formula 1B (Sample 2), a compound having the formula MnPc (O-C₆H₄-O-butyl)₁₆ (Sample 3) or a compound as shown in Formula 1C (Sample 4), PVB BX1 is polyvinylbutyral from Hercules, ECT 10 is ethyl cellulose from Sekisui, THF is tetrahydrofuran, Vylon 103 and 200 are high dye affinity polyesters from Toyobo, Tinuvin 234 is a UV absorber from Ciba-Geigy, Ketjenflex MH is toluenesulphonamide/formaldehyde condensate from Akzo, Cymel 303 is a hexamethoxymethylmelamine oligomeric crosslinking agent from American Cyanamid, Tegomer is a bis-hydroxyyalkylpolydimethylsiloxane from Th Goldschmidt and R4046 is an amine blocked p-toluene sulphonic acid catalyst.

Dye coat solutions containing respectively Samples 1, 2 and 3 of absorber material were applied to 23µm thick polyester film (S grade Melinex from ICI) using a K3 Meyer bar to give a dry coat thickness of circa 1.5µm. Sample 4 was applied as a subcoat in Methocel E5 beneath the dye layer.

The receiver coat solution was stirred until all solids were dissolved. Eight 20g batches of solution were removed. 0.06g of Samples 1 to 4 of absorber material were added respectively to four of the batches with further stirring, Each batch was coated on to a sheet of the same material as for the dye coat using a K3 Meyer bar to give a dry coat thickness of circa 3µm and cured at 140°C for 3 minutes.

The receiver sheets were placed in turn against separate portions of the dye sheet and held together against an arc to retain laser focus by the application of 1 atmosphere pressure. An SDL 150 mw diode laser operating at 807 nm was collimated using a 160mm achromat lens and projected on to the receiver sheet. The incident laser power was about 100 mw and the full spot size (full width at half power maxima) about 30 x 20 µm. The laser spot was scanned across the dye sheet by galvanometer to address the laser to locations 20 x 10 µm apart giving good overlap of adjoining dots. At each location the laser was pulsed for a specific time to build up a block of colour on the receiver, For each receiver, blocks of varying optical density were produced by varying the laser pulse times in increments of 50 µs between 50 and 500 µs inclusively to provide differing energy densities. The optical density of each block was measured using a Sakura densitometer operating in the transmission mode. The resulting optical densities at specified energy densities for Samples 1 to 4 of absorber material in the dye sheet only are shown in the Table. A more rapid build-up was achieved when the receiver sheet also contained absorber material.

| | Energy (j/cm²⁾ | | | |
|---|---|---|---|---|
| Sample | 2 | 4 | 8 | 8 |
| 1 | 0 | 0.2 | 0.68 | 1.8 |
| 2 | 0 | 0.2 | 0.68 | 1.32 |
| 3 | 0 | 0.41 | 1.08 | 1.8 |
| 4 | 0 | 0.05 | 0.26 | 0.65 |

### Example 2 (Preparation of Sample 2)

A mixture of 3,5-ditertbutylcatechol (20g, 0.09 mol), tetrachlorophthalonitrile (5.31g, 0.02 mol) and potassium carbonate (12.43g, 0.09 mol) in DMF (50ml) was heated and stirred at 140 C for 1 hour under an atmosphere of nitrogen and then allowed to cool. The resulting mixture was washed with methanol (2 x 400ml) and then water (2 x 400ml) and dried in air to give the product (9.05g, 80%) as an off-white solid. The product was a di-3,5-ditertbutylcatechol substituted phthalonitrile of the formula :

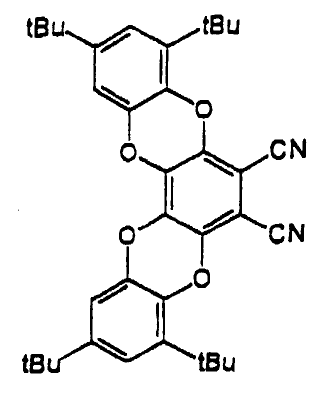

Lithium (0.08g, 0.012 mol) and n-butanol (4ml) were stirred at 120 C under an atmosphere of nitrogen for 2 hr. The di-3,5-ditertbutyl catechol substituted phthalonitrile (2.12g, 0.004 mol) and D.B.U. (0.57g) were added and the resulting mixture stirred at 110 C under an atmosphere of nitrogen for 4 h and then allowed to cool and drowned out into methanol. The resulting solid was collected by filtration and dried and then treated with methanol several times to remove impurities to leave the lithium phthalocyanine of the formula (1B): 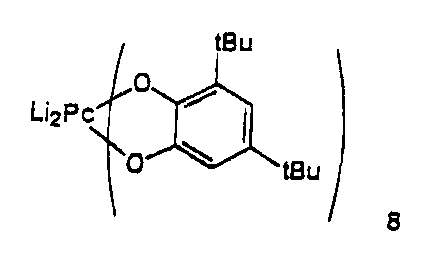 as a brown solid (0.74g) l max 832nm.

### Example 3 (Preparation of Sample1)

A proportion of the product of Example 2 (0.69g), toluene (20ml) and para-toluenesulphonic acid (0.23g) were stirred for 3 h. The solvent was then removed in vacuo and the resulting solid was dissolved in DCM and reprecipitated with methanol. The solid was then washed with methanol to leave the corresponding metal-free phthalocyanine (0.27g) as a brown solid; lmax 815nm (emax 152472).

## Claims

1. A thermal transfer dye sheet comprising a substrate having a dye coat comprising a transferable dye or mixture of dyes and a binder, and, either in said coat, or in a separate layer underneath the dye coat, a material capable of absorbing and converting light energy to thermal energy and having the Formula (1) :
MₖPc(-O-R-O-)ₓ (-YR¹)_{y} (-Z)ₘ (-SO₃A)ₙ
wherein MₖPc is a phthalocyanine nucleus of the formula (2) : 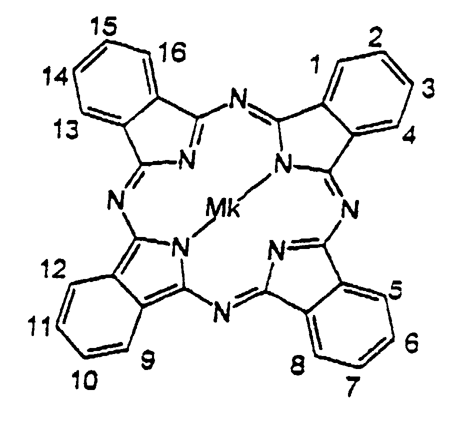
in which M represents a metal atom, a halogeno-metal group, an oxy-metal group or hydrogen and
k is the inverse of half the valency of M;
R represents an optionally substituted 1,2-arylene group:
Y represents oxygen or sulphur;
R¹ represents an optionally substituted hydrocarbyl group;
Z represents a halogen or hydrogen;
A represents hydrogen, a metal or optionally substituted ammonium;
x represents an integer from 1 to 8;
y represents an integer from 0 to 14;
m represents an integer from 0 to 14;
n represents an integer from 0 to 32;
the sum of 2x, y and m not exceeding 16, and the groups or atoms -O-R-O-, -YR¹ and Z are attached to the peripheral carbon atoms numbered 1 to 16 in Formula 2, with the proviso that when n is zero, at least one 1,2-arylene group represented by R carries at least one alkyl group containing at least four carbon atoms.

2. A thermal transfer dye sheet according to claim 1, in which the phthalocyanine nucleus carries two hydrogen atoms or one or two metal atoms, halageno-metal groups or oxy-metal groups complexed within the centre of the nucleus.

3. A thermal transfer dye sheet according to claim 2, in which the metal, halogeno-metal or oxy-metal is selected from the group comprising lithium, sodium, copper, nickel, zinc, manganese, iron, chloro-iron, chloro-aluminium, tin, lead, vanadyl and titanyl.

4. A thermal transfer dye sheet according to claim 1, in which the optionally substituted 1,2-arylene group is a naphthylene or phenylene group.

5. A thermal transfer dye sheet according to claim 4, in which the value of x is 4 or 8.

6. A thermal transfer dye sheet according to claim 1, in which the optionally substituted hydrocarbyl group is naphthyl or phenyl.

7. A thermal transfer dye sheet according to claim 6, in which the value of y is in the range from 0 to 8.

## Patentansprüche

1. Bogen zur Farbstoffübertragung durch Wärme, umfassend ein Substrat mit einer Farbstoffschicht, die einen übertragbaren Farbstoff oder eine Mischung von Farbstoffen und ein Bindemittel und entweder in der Schicht oder in einer getrennten Schicht unterhalb der Farbstoffschicht ein Material umfaßt, das zum Absorbieren von Lichtenergie und Umwandeln dieser in Wärmeenergie fähig ist und die Formel 1 aufweist:
MₖPc(-O-R-O)ₓ (-YR¹)_{y} (-Z)ₘ (-SO₃A)ₙ
worin MₖPc ein Phthalocyaninkern der Formel (2) ist: 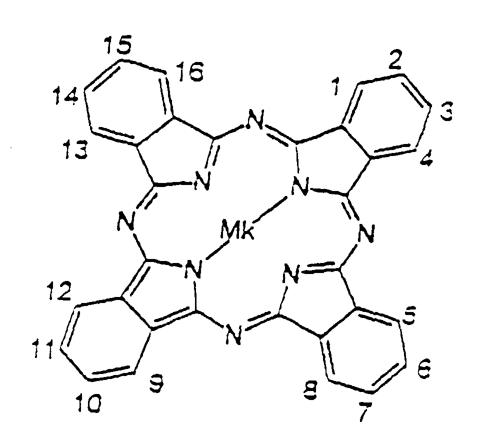
in weicher M ein Metallatom, eine Halogenmetallgruppe, eine Oxymetallgruppe oder Wasserstoff bedeutet und
k der Kehrwert der Hälfte der Valenz von M ist,
R eine fakultativ substituierte 1,2-Arylengruppe bedeutet,
Y Sauerstoff oder Schwefel bedeutet,
R¹ eine fakultativ substituierte Hydrocarbylgruppe bedeutet,
Z ein Halogenatom oder Wasserstoff bedeutet,
A Wasserstoff, ein Metall oder fakultativ substituiertes Ammonium bedeutet,
x eine ganze Zahl von 1-8 bedeutet,
y eine ganze Zahl von 0-14 bedeutet,
m eine ganze Zahl von 0-14 bedeutet,
n eine ganze Zahl von 0-32 bedeutet,
wobei die Summe von 2x, y und m 16 nicht tibersteigt, und die Gruppen oder Atome -O-R-O, -YR¹ und Z an die mit 1-16 numerierten peripheren Kohlenstoffatome in Formel (2) gebunden sind, mit der Maßgabe, daß, wenn n 0 ist, mindestens eine durch R dargestellte 1,2-Arylengrupce mindestens eine Alkylgruppe trägt, die mindestens vier Kohlenstoffatome enthält.

2. Bogen zur Farbstoffübertragung durch Wärme nach Anspruch 1, in weichem der Phthalocyaninkern zwei Wasserstoffatome oder ein oder zwei Metallatome, Halogenmetallgruppen oder Oxymetallgruppen trägt, die im Zentrum des Kerns einen Komplex bilden.

3. Bogen zur Farbstoffübertragung durch Wärme nach Anspruch 2, in weichem das Metall, Halogenmetall oder Oxymetall ausgewählt ist aus der Gruppe, die Lithium, Natrium, Kupfer, Nickel, Zink, Mangan, Eisen, Chloreisen, Chloraluminium, Zinn, Blei, Vanadyl und Titanyl umfaßt.

4. Bogen zur Farbstoffübertragung durch Wärme nach Anspruch 1, in welchem die fakultativ substituierte 1,2-Arylengruppe eine Naphthylen- oder Phenylengruppe ist.

5. Bogen zur Farbstoffübertragung durch Wärme nach Anspruch 4, in weichem der Wert von x 4 oder 8 ist.

6. Bogen zur Farbstoffübertragung durch Wärme nach Anspruch 1, in weichem die fakultativ substituierte Hydrocarbylgruppe Naphthyl oder Phenyl ist.

7. Bogen zur Farbstoffübertragung durch Wärme nach Anspruch 6, in welchem der Wert von y im Bereich von 0 bis 8 liegt.

## Revendications

1. Feuille de colorant pour le transfert thermique comprenant un substrat portant un revêtement de colorant comprenant un colorant ou un mélange de colorants pouvant être transféré et un liant, et, soit dans ledit revêtement, soit dans une couche séparée située en-dessous du revêtement de colorant, une matière capable d'absorber et de convertir de l'énergie lumineuse en énergie thermique et représentée par la Formule (1) :
Mₖ Pc (-O-R-O-)ₓ (-YR¹)_{y} (-Z)ₘ (-SO₃A)ₙ
dans laquelle :
MₖPc est un noyau phtalocyanine de Formule (2) : 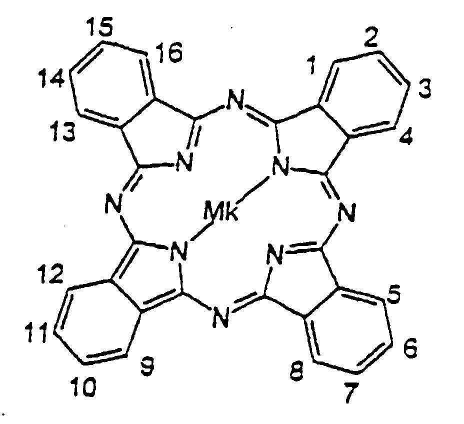 dans laquelle M représente un atome métallique, un groupe halo-métallique, un groupe oxy-métallique ou un atome d'hydrogène et
k est l'inverse de la moitié de la valence de M ;
R représente un groupe 1,2-arylène éventuellement substitué ;
Y représente un atome d'oxygène ou de soufre ;
R¹ représente un groupe hydrocarbyle éventuellement substitué ;
Z représente un atome d'halogène ou d'hydrogène ;
A représente un atome d'hydrogène, un atome de métal ou un groupe ammonium éventuellement substitué ;
x représente un entier de 1 à 8 ;
y représente un entier de 0 à 14 ;
m représente un entier de 0 à 14 ;
n représente un entier de 0 à 32 ;
la somme de 2x, y et m ne dépassant pas 16, et les groupes ou atomes -O-R-O- , -YR¹ et Z sont attaché aux atomes de carbone périphériques numérotés 1 à 16 dans la Formule 2, à la condition que lorsque n est zéro, au moins un groupe 1,2-arylène représenté par R porte au moins un groupe alkyle contenant au moins quatre atomes de carbone.

2. Feuille de colorant pour le transfert thermique suivant la revendication 1, dans laquelle le noyau phtalocyanine porte deux atomes d'hydrogène ou bien un ou deux atomes métalliques, groupes halo-métalliques ou groupes oxy-métalliques complexés à l'intérieur du noyau.

3. Feuille de colorant pour le transfert thermique suivant la revendication 2, dans laquelle le métal, l'halo-métal ou l'oxy-métal est choisi dans le groupe comprenant le lithium, le sodium, le cuivre, le nickel, le zinc, le manganèse, le fer, le chloro-fer, le chloro-aluminium, l'étain, le plomb, le vanadyle et le titanyle.

4. Feuille de colorant pour le transfert thermique suivant la revendication 1, dans laquelle le groupe 1,2-arylène éventuellement substitué est un groupe naphtylène ou phénylène.

5. Feuille de colorant pour le transfert thermique suivant la revendication 4, dans laquelle la valeur de x est 4 ou 8.

6. Feuille de colorant pour le transfert thermique suivant la revendication 1, dans laquelle le groupe hydrocarbyle éventuellement substitué est un groupe naphtyle ou phényle.

7. Feuille de colorant pour le transfert thermique suivant la revendication 6, dans laquelle la valeur de y est comprise dans la gamme de 0 à 8.
